# EUROPÄISCHE PATENTSCHRIFT

(11) **EP 2 918 745 B1**
(45) Veröffentlichungstag und Bekanntmachung des Hinweises auf die Patenterteilung: **27.11.2019**
(21) Anmeldenummer: 15158425.7
(22) Anmeldetag: 10.03.2015
(51) Int. Cl.: E04B 1/86

(54) **VERBUND-DECKSCHICHT FÜR SCHALLABSORBIERENDES ELEMENT**
COMPOSITE COATING LAYER FOR A NOISE ABSORBING ELEMENT
COUCHE DE RECOUVREMENT COMPOSITE POUR ÉLÉMENT ABSORBANT LE SON

(30) Priorität: 10.03.2014 CH 3482014; 27.08.2014 CH 12842014
(43) Veröffentlichungstag der Anmeldung: 16.09.2015
(73) Patentinhaber: Akustik & Raum AG, 4601 Olten (CH)
(72) Erfinder: Bähler, Robert, 8512 Thundorf (CH)
(74) Vertreter: Rentsch Partner AG

(56) Entgegenhaltungen:
- WO-A1-2011/134506
- DE-A1-102005 019 433
- Alfons Oebbeke: "FIREwood: nichtbrennbare Gipsfaserplatte trifft auf Echtholzfurnier", , 20 May 2011 (2011-05-20), pages 1-3, XP055520005, Internet Retrieved from the Internet: URL:https://www.baulinks.de/webplugin/2011 /0859.php4 [retrieved on 2018-10-30]
- | K Versammlungsstätten ET AL: "4. HolzBauSpezial Akustik & Brandschutz 2013 Echtholzfurnier auf nichtbrennbaren Trägerplatten in notwendigen Fluren Echtholzfurnier auf nichtbrennbaren Trägerplatten in notwendigen Fluren und Versammlungsstätten", , 7 February 2013 (2013-02-07), pages 1-8, XP055520009, Internet Retrieved from the Internet: URL:http://www.forum-holzbau.com/pdf/HBS_b auphysik_13_Lang.pdf [retrieved on 2018-10-30]

## Beschreibung

### TECHNISCHES GEBIET

Die Erfindung bezieht sich auf ein Verfahren zur Herstellung einer mikroperforierten Verbund-Deckschicht für ein schallabsorbierendes Element. Die Erfindung bezieht sich ferner auf ein Verfahren zur Herstellung eines schallabsorbierendes Elements mit einer mikroperforierten Verbund-Deckschicht.

### STAND DER TECHNIK

Schallabsorbierende Elemente werden bei der Raumgestaltung verwendet, um einerseits die akustischen Eigenschaften eines Raums zu beeinflussen und zugleich den Raum ästhetisch ansprechend zu gestalten. Schallabsorbierende Elemente mit einer mikroperforierten Deckschicht, welche auf einer mit durchgehenden Kanälen versehenen Trägerschicht aufgebracht ist, erfüllen zugleich die schallabsorbierenden und die ästhetischen Anforderungen. Bereiche der Mikroperforation der Deckschicht münden in durchgehende Kanäle der Trägerschicht, wobei Schallwellen in die Mikroperforation der Deckschicht eindringen und im Zusammenwirken mit den durchgehenden Kanälen der Trägerschicht absorbiert werden, sodass eine schallabsorbierende Wirkung besteht. Die Mikroperforation ist schon ab einem geringen Abstand zur Deckschicht für das menschliche Auge kaum mehr wahrnehmbar, sodass der ästhetische Eindruck der Deckschicht, also z.B. ein Furnierholz, vollumfänglich zur Geltung kommt.

Zum Verständnis der vorliegenden Erfindung hilfreich ist ein Verständnis für den grundlegenden Aufbau und die Funktionsweise verschiedener Absorber und insbesondere mikroperforierter Absorber. Eine grundlegende Übersicht über Materialien und Bauformen von Schallabsorbern bietet das Lehrbuch "Schallabsorber und Schalldämpfer" von Prof. Helmut V. Fuchs, Springer Verlag Berlin Heidelberg New York 2007, 2. Auflage. Hinsichtlich der physikalisch-technischen Grundlagen basiert die vorliegende Erfindung weitgehend auf der in diesem Lehrbuch "Schallabsorber und Schalldämpfer" bereitgestellten Lehre und nutz dessen Terminologie. Mikroperforierte Absorber werden insbesondere in Kapitel 9 des Lehrbuchs "Schallabsorber und Schalldämpfer" behandelt. Des weiteren wird auf die WO2013/159240 hingewiesen, welche schallabsorbierende Elemente mit mikroperforierten Absorbern offenbart und in ihrem einleitenden Teil wesentliche Lehren des erwähnten Lehrbuchs "Schallabsorber und Schalldämpfer" zusammenfasst.

Gemäss der Darstellung in Kapitel 9 des erwähnten Lehrbuchs "Schallabsorber und Schalldämpfer" resultiert die schallabsorbierende Wirkung mikroperforierter Absorber wesentlich auf der Luftreibung in einer Vielzahl von kleinen Löchern oder Schlitzen (d. h. der Mikroperforation), welche Schallenergie absorbiert. Eine den eigentlichen Absorber bildendes flächenhaftes und mikroperforiertes Element, z. B. eine mikroperforierte Platte, wird dabei vorzugsweise mit einem Abstand zu einer schallharten Rückwand montiert. Die Mikroperforation besteht dabei aus einem Muster von zwischen der Vorderseite und der Rückseite der Platte durchgängigen Kanälen, welche zum Beispiel durch viele nebeneinander angeordnete Löcher oder Schlitze gebildet werden. Dabei kann die Luft in den Löchern oder Schlitzen der Mikroperforation zusammen mit der Luft im Zwischenraum zur schallharten Rückseite nach Art eines Helmholtz-Resonators schwingen (Kapitel 6 des erwähnten Lehrbuchs "Schallabsorber und Schalldämpfer"). Die mikroperforierten Absorber können grundsätzlich ohne den Einsatz poröser/faseriger Dämpfungsmaterialien auskommen. Ihre akustische Wirksamkeit ergibt sich fast unabhängig von der Materialwahl allein durch ihre geometrischen Parameter. Daher können die Materialien mikroperforierter Absorber weitgehend auf Grundlage ästhetischer Gesichtspunkte und sonstiger technischer und nicht-technischer Randbedingungen, wie etwa unter Gesichtspunkten des Brandschutzes, gewählt werden. Die schallharte Rückseite kann, z. B. in Form einer Betonwand oder Bentondecke, auch in einem Abstand zum mikroperforierten Absorber angeordnet sein.

In der Praxis hat sich ferner gezeigt, dass eine schallharte Rückwand als solche zur Erzielung einer ausreichenden bis guten schallabsorbierenden Wirkung des mikroperforierten Absorbers nicht in jedem Fall zwingend ist. Vielfach ist es ausreichend, im Anschluss an den mikroperforierten Absorber mit mikroperforierter Deckschicht und Trägerschicht gemäss obiger Beschreibung ein weiteres durch Reibung schallabsorbierendes Element, z. B. eine Schicht aus Fasermaterial, z. B. Mineralfasern, oder auch Luft anzuordnen.

Bei mikroperforierten Absorbern wird ein verhältnismäßig kleines Lochflächenverhältnis der Mikroperforation zur Gesamtoberfläche (bevorzugt in der Größenordnung von 1%, praktisch aber auch bis ca. 10%) gewählt. Vor allem wird aber die kleinste Abmessung der Kanäle, also z. B. Löcher oder Schlitze, stets so klein gemacht, dass sie in die Größenordnung der akustischen Grenzschicht einer laminaren Strömung in den Kanälen gerät. Die Kanäle der Mikroperforation können demnach grundsätzlich beliebig geformt sein, wobei jedoch mindestens eine halbe Querabmessung in der Größenordnung der laminaren Grenzschichtdicke liegt. Sie ermöglichen - wegen der Mündungseffekte an den kleinen Löchern - Schalldämpfung auch in infinitesimal dünnen Schichten nahezu beliebiger impermeabler Materialien und sie lassen sich ebenso vielfältig wie faserige/poröse Absorber mit Hohlräumen hinter/vor dem mikroperforierten Flächengebilde koppeln.

Hinter dem mikroperforierten Element als Deckschicht ist eine Trägerschicht - z. B. aus Gips oder Aluminiumwaben - mit von ihrer Vorderseite zu ihrer Rückseite durchgehenden Kanälen angeordnet, wobei die Trägerschicht die Deckschicht trägt und stützt. Dabei stellen die Kanäle der Trägerschicht einen Resonanzraum dar, in welchem die Luft - wie oben beschrieben - schwingt. Zwischen der Deckschicht und der Trägerschicht kann optional eine Zwischenschicht als Distanzhalter angeordnet sein, welche selbst akustisch durchlässig ist oder durchgängige Kanäle aufweist und so die Kanäle der Mikroperforation und die Kanäle der Trägerschicht akustisch koppelt. Eine schallharte Rückwand kann unmittelbar hinter der Trägerschicht, oder - wie oben erläutert - auch in einem Abstand hierzu angeordnet sein, oder es kann, wie erwähnt, unter praktischen Gesichtspunkten auf sie verzichtet werden.

Im Gegensatz zu den sogenannten passiven Absorbern erfolgt bei den mikroperforierten Absorbern die Reibung nicht an dünnen Fasern und in feinen Poren, die räumlich oder flächig, mehr oder weniger homogen, verteilt sind, sondern in engen Perforationen, die in im Übrigen unpermeablen, flächigen Gebilden auf wendigen % der Fläche konzentriert sind. Im Gegensatz zu den in fasrigen oder porösen Materialien vorhandenen Strömungskanälen weist eine Mikroperforation im hier verwendeten Sinne also eine geometrisch wohldefinierte und typischerweise regelmässige Struktur auf.

Im praktischen Einsatz werden mikroperforierte Absorber aber auch häufig in Kombination mit passiven Absorbern als Sandwich-Struktur bzw. Schichtverbund angeordnet. So kann eine Wandverkleidung beispielsweise einen (sichtbaren) mikroperforierten Absorber und eine sich anschliessende Isolationsschicht umfassen.

Die DE 10 2005 019 433 A1 offenbart eine Leichtbauplatte mit einem Wabenkern und mindestens zweiseitiger Beplankung. Die Beplankung weist ein- oder beidseitig Durchbrechungen auf, wobei die Beplankungen durch ein Furnier oder durch eine Dekorfolie bzw. ein Dekorpapier gebildet sein kann. Die DE 10 2005 019 433 A1 offenbart die Merkmale des einleitenden Teils des Anspruchs 1.

Bei der Verwendung schallabsorbierender Elemente im Innenbereich, z. B. als Wandelemente in der innenarchitektonischen Raumgestaltung oder auch bei mobilen Trennwänden, sind Farbe, Struktur, und allgemeine Oberflächenbeschaffenheit der sichtbaren Oberfläche von zentraler Bedeutung. In vielen Fällen weisen solche schallabsorbierende Elemente daher eine hölzerne Deckschicht, z. B. in Form eines Holzfurniers, auf. Die Wirkung als mikroperforierte Absorber ergibt sich durch eine von der sichtbaren Vorderseite zur Rückseite durchgängige Mikroperforation im oben beschriebenen Sinne. Die eigenstabile hölzerne Deckschicht übernimmt dabei sowohl die Funktion eines mikroperforierten Resonator-Elements als auch - aufgrund ihrer Oberfläche - die Funktion einer Dekorschicht mit vornehmlich ästhetischer Wirkung. Neben klassischen Holzfurnieren kommen als Dekorschicht auch andere Materialien, wie CPL (Continuous Pressure Laminate) oder Kunststoffe, beispielsweise Polycarbonat, zum Einsatz. Ferner können für die Dekorschicht rekonstruierte Holzwerkstoffe (z. B. Alpi Furnier) eingesetzt werden.

### DARSTELLUNG DER ERFINDUNG

Erhebliche Herausforderungen bei der Entwicklung und Herstellung akustisch wirksamer wie ästhetisch ansprechender Schallschutzelemente für den Innenbereich ergeben sich aus den zunehmenden Anforderungen im Bereich des Brandschutzes. Dieser ist vorwiegend in öffentlichen Gebäuden, in grösseren Räumen und in Hochhäusern ein wichtiges und zwingendes Thema. Die schallabsorbierenden Akustik-Elemente werden an Decken und Wänden mit der Grundkonstruktion des Gebäudes fest verbunden und unterstehen deshalb den Bauvorschriften mit entsprechenden Baustoffklassen. Die Baustoffklassen sind derzeit nach DIN EN 13501-1 (früher nach DIN 4102.1) sowie in Prüfnormen (EN ISO 1182, EN ISO 1716, EN ISO 9239 und EN ISO 9239-1) definiert.

Gemäss der früher geltenden Norm wurde ein Element mit einem Trägermaterial aus schwerentflammbarem B1-MDF in die Brandklasse B1 eingestuft. Mit einem Trägermaterial aus A2-Gips wurde das schallabsorbierende Element in die strenge Brandklasse A2 eingestuft.

Gemäss der neuen Brandschutz-Einstufung nach DIN EN 13501-1 bei Akustik-Elementen werden diese "im Verbund", d. h. als Ganzes, geprüft und eingestuft. Sie müssen daher die für die einzelnen Brandschutzklassen festgelegten Grenzwerte inklusive aller Lackierungen, Klebstoffschichten, sonstiger Zwischenschichten etc. einhalten. Neu werden auch Rauchentwicklung und ein allfälliges Abtropfen geprüft und bei der Einstufung berücksichtigt.

Grundsätzlich scheint es daher wünschenswert, bei den schallabsorbierenden Elementen auf brennbare Bestandteile zu verzichten bzw. ihren Anteil auf ein Minimum zu beschränken. Ein völliger Verzicht auf brennbare Materialien - wie beispielsweise Holz - ist aus ästhetischen und allgemeinen innenarchitektonischen Gründen häufig nicht möglich. Entsprechend besteht eine Herausforderung dahin, trotz des Einsatzes brennbarer Materialien einen möglichst guten Brandschutz zu gewährleisten. Grundsätzlich wünschenswert ist eine Einstufung in die Brandklasse A2 (nicht brennbar mit brennbaren Bestandteilen), welches für Elemente mit brennbaren Komponenten die strengste erreichbare Klasse ist. Dies bedeutet unter anderem, dass der flächenbezogene Brennwert der schallabsorbierenden Elemente - einschliesslich Verklebungen, Lackierungen usw. - einen Wert von 4 MJ/m² nicht überschreiten darf. Aber auch bei etwas geringeren Anforderungen ist ein niedrigerer Brennwert sowie ein günstiges Verhalten bezüglich Rauchentwicklung und Abtropfen anzustreben.

Etwa bei der Verwendung von Holzfurnieren als Dekorschicht ergibt sich, selbst wenn das schallabsorbierende Element ansonsten lediglich aus nicht brennbaren Bestandteilen, wie etwa Gips, besteht, eine maximal zulässige Dicke im Bereich weniger Zehntel Millimeter. Aus dem speziellen Einsatzgebiet als Teil eines mikroperforierten Absorbers ergeben sich jedoch eine Reihe spezieller Anforderungen und Randbedingungen, die dem unmittelbaren Einsatz entsprechend dünner Dekorschichten entgegenstehen beziehungsweise ihn begrenzen. Diese speziellen Anforderungen und Randbedingungen ergeben sich insbesondere aus Aspekten der mechanischen Stabilität sowie der akustischen/physikalischen Funktionsweise.

Aus Gründen der Stabilität bei der Handhabung und Verarbeitung sowie insbesondere der mechanischen Beanspruchung bei der Herstellung der Mikroperforation ist die Herstellung derart dünner Deckschichten oder Dekorschichten aus ästhetisch ansprechenden Materialien bislang kaum praktikabel durchführbar.

Erhältliche Furnierhölzer etwa weisen bereits in ihrer Grundform eine Dicke von mehr als einem halben Millimeter auf und müssen zusätzlich vor der Perforierung mit einem Viskosematerial kaschiert werden, so dass sich eine Gesamtdicke im Bereich von typischerweise 0.7mm bis 0.8mm ergibt. Diese kann nur schwer unterschritten werden, da bei geringerer Dicke die bei Furnieren vorhandene Verleimung der Kanten (Furnierverleimung) zwischen den nebeneinander liegenden einzelnen Furnierbahnen versagen kann. Die hieraus insgesamt resultierende Brandlast verunmöglicht die Einhaltung der Erfordernisse strenger Brandschutzklassen, wie oben angegeben. Auch aus Gründen der erforderlichen Stabilität bei der Handhabung insgesamt sowie insbesondere beim Einbringen der Mikroperforation ist eine geringere Dicke kritisch.

Wie weiter oben bei der Erläuterung der Funktion mikroperforierter Absorber dargestellt, beruht die schallabsorbierende Wirkung wesentlich auf der Luftreibung an den Grenzen zu den Kanalwandungen der Mikroperforation. Die durch die Dicke der Deckschicht gegebene Länge der Kanäle der Mikroperforation beeinflusst damit unmittelbar die akustische Wirksamkeit des Absorbers, weshalb eine beliebige Verringerung der Deckschichtdicke bei gleichzeitig hoher akustischer Wirksamkeit für diese Absorber nicht möglich ist. Auch wenn die Deckschicht mikroperforierter Absorber typischerweise eine Dekorschicht ist in dem Sinne, dass sie dekorativen, ästhetischen, bzw. allgemein inne architektonischen Anforderungen genügen muss, ist sie darüber hinaus zugleich ein technisch wesentlicher und akustisch wirksamer Bestandteil des schallabsorbierenden Elements.

Neben den Anforderungen des Brandschutzes existiert bei Schallabsorbern der beschriebenen Art mit mikroperforierter Dekorschicht das Problem, dass insbesondere weiche Dekorschichten, z. B. viele Echtholzfurniere, durch den Druck des Stanzwerkzeugs beim Herstellen der Mikroperforation gequetscht und in ihrer Oberflächenbeschaffenheit beschädigt werden. Dies resultiert in einer verminderten Oberflächenqualität sowie unter Umständen dem (teilweisen) Verschluss der Mikroperforation.

Eine allgemeine Aufgabe der vorliegenden Erfindung besteht darin, schallabsorbierende Elemente nach dem Prinzip der mikroperforierten Absorber bereitzustellen, welche mindestens gewisse Nachteile des Standes der Technik vermeiden oder gegenüber diesem Verbesserungen aufweisen. Es ist insbesondere eine Aufgabe der Erfindung, schallabsorbierende Elemente bereitzustellen, welche eine geringe Brandlast darstellen und zugleich unter ästhetischen wie hinsichtlich der akustischen Wirksamkeit vorteilhaft gestaltet werden können. Eine Aufgabe der vorliegenden Erfindung ist ferner die Bereitstellung technisch wie wirtschaftlich praktikabler Herstellungsverfahren für solche schallabsorbierenden Elemente.

Diese Aufgabe wird insbesondere durch die in den unabhängigen Patentansprüchen definierten Merkmale gelöst. Spezielle vorteilhafte Ausgestaltungen sind in den abhängigen Patentansprüchen sowie der nachfolgenden Beschreibung und den Figuren definiert.

Gemäss einem Aspekt wird die Aufgabe durch ein Verfahren zur Herstellung einer mikroperforierten Verbund-Deckschicht für ein schallabsorbierendes Element gelöst. Das Verfahren umfasst:
a) Bereitstellen einer Dekorschicht und einer Stützschicht mit jeweils einer Vorderseite und einer Rückseite;
b) Verbinden der Rückseite der Dekorschicht und der Vorderseite der Stützschicht zu einem die Verbund-Deckschicht bildenden Schichtverbund;
c) Reduktion einer Dicke der Dekorschicht von einer Anfangsdicke d₀ auf eine Enddicke d₁ durch flächiges Abtragen eines Teils der Dekorschicht von ihrer Vorderseite her;
d) Versehen der Verbund-Deckschicht mit einer Mikroperforation aus zwischen der Vorderseite der Dekorschicht und der Rückseite der Stützschicht durchgängigen Kanälen definierter Querschnittsgeometrie.

Die Dekorschicht und die Stützschicht werden dabei in flächiger Form bereitgestellt.

Die Reduktion der Dicke der Dekorschicht erfolgt dabei nach dem Schritt des Verbindens der Dekorschicht und der Stützschicht. Die Enddicke der Dekorschicht d₁ beträgt dabei höchstens 0.6 mm. Des Weiteren umfasst die Dekorschicht ein Holzfurnier und die Stützschicht ein nichtbrennbares Element. Durch die Reduktion der Dicke der Dekorschicht erfolgt eine substantielle Reduktion eines flächenbezogenen Brennwertes der Verbund-Deckschicht. Die Enddicke der Dekorschicht d₁ ist mindestens 10% geringer als die Anfangsdicke der Dekorschicht d₀ und ist bevorzugt mindestens 20% geringer als die Anfangsdicke der Dekorschicht d₀.

Die Herstellung der Verbund-Deckschicht erfolgt ferner bevorzugt separat von einer Trägerschicht eines schallabsorbierenden Elements in einem eigenständigen Produktionsschritt. Die Rückseite der Stützschicht ist demnach während der Herstellung der Verbund-Deckschicht (noch) nicht mit einer Trägerschicht verbunden; eine solche Verbindung findet erst nachfolgend statt.

Soweit nicht im Einzelfall anders definiert, werden hier und im weiteren die Begriffe "verbinden" und "Verbindung" im Sinne einer dauerhaften Verbindung, insbesondere einer stoffschlüssigen Verbindung, verwendet; sie wird typischerweise durch flächiges Verkleben bzw. verleimen hergestellt.

Der Begriff "Mikroperforation" wird in Übereinstimmung mit dem im technischen Gebiet üblichen Verständnis einer flächigen Anordnung einer Vielzahl von Kanälen in Form von Bohrungen, Schlitzungen, etc. verwendet, welche das mikroperforierte Element von seiner Forderseite zu Rückseite durchgängig durchsetzen, also keine Sack- oder Blindlöcher darstellen, sondern zwischen Vorder- und Rückseite durchgängige Kanäle. Für flächige mikroperforierte Materialien, wie hier vorliegend, sind die einzelnen Kanäle typischerweise parallel zur Flächennormalen, d. h. senkrecht zur Vorder- bzw. Rückseite orientiert. Einzelne Kanäle der Mikroperforation bilden damit zumindest über flächige Abschnitte der Verbund-Deckschicht ein definiertes geometrisches Muster, beispielsweise ein Quadratraster. Die Mikroperforation kann über die gesamte Fläche des Schallschutzelementes durchgängig sein oder kann einzelne Bereiche, z. B. Stege und/oder Ränder, aus Stabilitätsgründen aussparen.

Die einzelnen Kanäle der Mikroperforation können sowohl eine kreisförmige als auch eine andere Querschnittsgeometrie aufweisen und z. B. durch Schlitze oder Langlöcher gebildet werden. Wesentlich ist die Erfüllung der physikalischen Anforderungen, wie oben beschrieben, so dass die Erfordernisse der laminaren Strömung und die Wirkung als Bestandteil eines Helmholtz-Resonators gegeben sind. Die Herstellung der Mikroperforation erfolgt typischerweise durch Stanzen, kann aber auch auf andere Weise erfolgen, z. B. mittels Nadelwalzen, durch Wasserstrahlschneiden oder Laserbrennen. Vorzugsweise erfolgt die Herstellung der Mikroperforation nicht durch Bohren.

Die Stützschicht sorgt für eine ausreichende Stabilität während der Mikroperforierung. Die als Ergebnis dieses Herstellungsverfahrens entstehende Verbund-Deckschicht besitzt dank der Stützschicht auch eine für die weitere Handhabung und Verarbeitung ausreichende mechanische Stabilität. Bei einem Holzfurnier wird insbesondere der Zusammenhalt der einzelnen neben einander liegenden Furnierbahnen nach der Verbindung mit der Stützschicht durch diese gewährleistet und nicht mehr bzw. nur noch zu einem geringeren Mass durch die Furnierleimung. Daher ist die sich ergebende reduzierte Furnierdicke auch in dieser Hinsicht unkritisch. In der Phase, in der sie isoliert verarbeitet wird, hat die Dekorschicht dagegen (noch) eine grössere Dicke d₀, die ihre Handhabbarkeit und Stabilität gewährleistet.

Die sich als Ergebnis des Verfahrens ergebende Verbund-Deckschicht stellt entsprechend der Enddicke d₁ reduzierte Brandlast dar. Die Dicke der Dekorschicht kann dabei - unter Berücksichtigung fertigungstechnischer und wirtschaftlicher Gesichtspunkte - bis auf das Mass reduziert werden, welches zur Erfüllung seiner dekorativen und ästhetischen Funktion erforderlich ist.

Ferner ist als akustisch/physikalisch wirksame Länge der Kanäle der Mikroperforation die gesamte Dicke der (reduzierten) Dekorschicht sowie der Stützschicht wirksam. Diese Gesamtlänge liegt im gleichen Bereich wie die Kanallänge üblicher Furnierschichten ohne zusätzliche Stützschicht.

Demnach wird entsprechend der vorliegenden Erfindung die üblicherweise einstückige Deckschicht in zwei Schichten aufgeteilt, wobei die eine Schicht, nämlich die Dekorschicht, eine dekorative bzw. ästhetische Funktion hat, während die mechanische Stabilität durch die zweite Schicht, nämlich die Stützschicht, gewährleistet wird. Die akustisch/physikalsiche Funktion wird durch die durchgängige Mikroperforation in beiden Schichten gemeinsam realisiert.

In einigen Ausführungsformen ist die die Enddicke d₁ mindestens 20% geringer als die Anfangsdicke d₀. Die Enddicke d₁ kann aber auch z. B. 50% geringer sein als die Anfangsdicke d₀.

Zur Reduktion der Brandlast wird eine substantielle Dickenreduktion der Dekorschicht vorgenommen. Dies bedeutet, dass die Dickenreduktion eine substantielle Reduktion des flächenbezogenen Brennwertes und damit der Brandlast bewirkt. Die ist zu unterschieden von einem bekannten geringfügigen Überschleifen, wie es z. B. bei Furnierschichten vor einer Lackierung üblich ist. Ein solches Überschleifen kann bei einer erfindungsgemässen Verbund-Decksicht zusätzlich erfolgen. Abgesehen von der Reduktion der Brandlast werden durch den Schritt der Reduktion der Dicke der Dekorschicht etwaige bei der Einbringung der Mikroperforation entstandenen Beschädigungen der Dekorschicht-Oberfläche ebenfalls abgetragen, wodurch sich eine erhöhte optische Oberflächenqualität ergibt. Dies ist insofern von Bedeutung, als in zahlreichen Anwendungen eine optisch weitgehend perfekte Oberflächenqualität gefordert wird. Je nach dem für die Dekorschicht verwendeten Material und dem Einsatzgebiet kann dieser Aspekt gegenüber der Reduktion der Brandlast auch im Vordergrund stehen oder alleine massgeblich sein.

In einigen Ausführungsformen ist die Dekorschicht ein Holzfurnier. Das Furnier kann dabei sowohl ein klassisches Echtholzfurnier sein als auch aus einem rekonstruierten Holzwerkstoff bestehen, z. B. Alpi Furnier. Daneben können - je nach gewünschtem ästhetischen Effekt, Kosten, etc. auch weitere Materialien eingesetzt werden, beispielsweise CPL (Continuous Pressure Laminate) oder Kunststoffe wie z. B. Polykarbonat, oder Epoxydharz.

In einige Ausführungsformen umfasst die Stützschicht eine Aluminiumfolie. Diese wird - zumindest auf ihrer Vorderseite - vor dem Verbinden mit der Dekorschicht zur Erzielung einer guten Klebverbindung mechanisch und/oder chemisch vorbereitet, beispielsweise durch chemische Passivierung. In Hinblick auf die weitere Verarbeitung besteht die Aluminiumfolie bevorzugt aus mittelhartem Aluminium. Hinsichtlich der Brandeigenschaften besitzt Aluminiumfolie die weitere vorteilhafte Eigenschaft hoher Wärmeleitfähigkeit. Somit kann sie die beim Brand auftretende Brandwärme gut ableiten. Auch andere Metallfolien mit diesbezüglich ähnlichen Eigenschaften können grundsätzlich eingesetzt werden, z. B. eine Kupferfolie.

Alternativ können ferner andere nicht brennbare Materialien und Elemente, beispielsweise ein Aluminiumblech, ein Glasfaserkomposite bzw. eine Glasfaserkaschierung, ein Kohlefaserkomposite, oder ein Phenolharzkomposite eingesetzt werden. Die Verwendung eines nicht brennbaren Materials für die Stützschicht ist unter Aspekten des Brandschutzes allgemein vorteilhaft und erhöht insbesondere - bei gegebenem Brennwert-Schwellwert - die Flexibilität hinsichtlich anderer Bestandteile des schallabsorbierenden Elements, insbesondere der Dekorschicht.

Ferner kann die Stützschicht mindestens eine Schicht aus einem Harzmaterial, insbesondere aus Epoxydharz, Phenolharz oder Melaninharz und/oder eine Schicht aus einer Glasfaserkaschierung umfassen, wobei die Glasfasern typischerweise in einer Harzschicht bzw. einem Harzbett eingebettet sind.

Hinsichtlich des Brandschutzes sind zumindest viele Harzmaterialien weniger vorteilhaft als die zuvor beschriebenen Metallfolien, insbesondere Aluminiumfolien. Harzmaterialien haben im ausgehärteten Zustand als Duroplaste jedoch den Vorteil grosser Härte und Sprödigkeit. Dies ist in Hinblick auf die Qualität der Mikroperforation und allgemein eine Vermeidung von Beschädigungen insbesondere weicher Dekorschichten beim Einbringen der Mikroperforation vorteilhaft.

Die Stützschicht kann vorteilhaft ferner beim Einbringen der Mikroperforation zur Trockenschmierung des Stanzwerkzeugs dienen, was sich vorteilhaft auf die Qualität der Mikroperforation auswirkt. Eine beispielhafter geeigneter Aufbau einer derartigen Stützschicht besteht aus einer Sandwich-Struktur zwei Melaninharzschichten mit einer dazwischen liegenden Vliesschicht und einer rückseitigen Papierkaschierung. Die Gesamtdicke der Stützschicht beträgt z. B. 0.2 mm bis 0.4 mm. Ebenfalls vorteilhaft in dieser Hinsicht ist eine Glasfaserkaschierung der zuvor beschriebenen Art mit in Harzbett eingebetteten Glasfasern.

Ferner kann die Stützschicht sowohl eine hinsichtlich des Brandschutzes vorteilhafte Metallfolie, insbesondere Aluminiumfolie, als auch eine Harzschicht, z. B. eine Phenol- oder Melaninharzleimschicht umfassen. Die dünne Harzschicht ist dabei in einer Sandwich-Struktur zwischen der Dekorschicht und der Metallfolie angeordnet und dient der Verleimung der Dekorschicht mit der Metallfolie. Optional ist ferner eine rückseitige Fliess- oder Papierkaschierung vorgesehen. Ein derartiger Aufbau besitzt hinsichtlich des Brandschutzes weitgehend die vorteilhaften Eigenschaften einer metallischen Stützschicht. Durch die Verwendung eines Harzmaterials zur Verleimung erhöht zugleich die Härte der Stützschicht und sorgt für eine Trockenschmierung beim Einbringe der Mikroperforation.

Entsprechend derartiger Ausführungsformen umfasst das Verfahren während des Versehens der Verbunddeckschicht mit der Mikroperforation ein Schmieren eines Werkzeugs, mittels welchem die Mikroperforation eingebracht wird, durch die Stützschicht, insbesondere durch ein Harzmaterial der Stützschicht. Hierzu weisst mindestens eine Schicht aus Harzmaterial eine zur Erzielung der Schmierwirkung ausreichende und geeignete Dicke auf, wobei die erforderliche Dicke insbesondere durch das Harzmaterial selbst, die perforierten Materialien sowie die Geometrie und Grösse der Kanäle der Mikroperforation richtet. Das Zum Einbringen der Mikroperforation verwendete Werkzeug kann dabei insbesondere ein Werkzeug zum Walzen, Stanzen oder Nadeln sein.

In einigen Ausführungsformen umfasst das Verfahren fernern das Festlegen eines flächenbezogenen Brennwert-Schwellwerts und ein Bemessen der Enddicke d₁ so, dass ein flächenbezogener Brennwert der Verbund-Deckschicht den Brennwert-Schwellwert nicht überschreitet. Der flächenbezogene Brennwert-Schwellwert richtet sich dabei nach den hinsichtlich Brandschutz zu erfüllenden Anforderungen, beispielsweise der zu erreichenden Brandklasse nach Norm EN 13501-1. Neben den Elementen der Verbund-Deckschicht selbst, also Dekorschicht, Stützschicht und ggf. weiteren Schichten wie Klebstoffschichten und/oder Lackschichten, können dabei die Brandlasten weiterer Bestandteile des fertigen schallabsorbierenden Elements berücksichtigt werden. Je nach dem Mass der Dickenreduktion die Festlegung einer Dicke der Stützschicht bzw. die Auswahl eines Halbzeuges für die Stützschicht so erfolgen, dass sich eine vorgegebene Länge der Kanäle der Mikroperforation ergibt.

In einigen Ausführungsformen bestehen die Kanäle der Mikroperforation aus Löchern mit einem kreisförmigen Querschnitt mit einem Durchmesser im Bereich von 0.2mm bis 1mm, insbesondere 0.3mm oder 0.5mm. Alternativ und/oder zusätzlich macht die durch die Kanäle der Mikroperforation gebildete offene Fläche einen Anteil von 1% bis 10% einer Gesamtfläche der Verbund-Deckschicht aus. Alternativ und/oder zusätzlich liegt die flächenbezogene Dichte der Kanäle der Mikroperforation in einem Bereich von 200.000 bis 600.000 Kanälen/m², beispielsweise bei 300.000 Kanälen/m².

Die konkrete Auslegung der Mikroperforation erfolgt dabei auf Grundlage der grundsätzlich bekannten und oben erläuterten Funktionsweise mikroperforierter Absorber. Wie bereits erwähnt, ist die Form der einzelnen Kanäle oder Löcher nicht notwendigerweise kreisförmig, sondern kann in alternativen Ausführungsformen auch die Form von Schlitzen, Langlöchern oder ähnlichem haben, solange die oben dargestellten Bedingungen für eine Absorption von Schallenergie an den Kanalwandungen erfüllt sind.

In einigen Ausführungsformen erfolgt die Reduktion der Dicke der Dekorschicht durch Schleifen. Je nach Material der Dekorschicht und Abmessungen kann die Reduktion der Dicke aber grundsätzlich auch durch andere abrasive oder spanhabhebende Verfahren, z. B. Fräsen erfolgen.

Erfindungsgemäß beträgt die Enddicke d₁ der Dekorschicht höchstens 0. 6mm. Für typische eingesetzte Furnierhölzer lassen sich mit einer Schichtdicke im Bereich von 0.6mm oder darunter hinsichtlich des Brandschutzes günstige Werte erzielen. Es können auch noch geringere Enddicken der Dekorschicht gewählt werden, z. B. eine Enddicke d₁ von höchstens 0.5mm oder höchsten 0.3mm.

In einigen Ausführungsformen erfolgt das Versehen der Verbund-Deckschicht mit der Mikroperforation nach Reduktion der Dicke der Dekorschicht, d. h. nach dem Erreichen der reduzierten endgültigen Dicke. Grundsätzlich kann das Einbringen der Mikroperforation auch vor der Dickenreduktion der Dekorschicht erfolgen, wobei hier Grenzen bzgl. der Werkzeuge für die Perforierung bestehen und die Standzeit der Perforationswerkzeuge aufgrund der dann erforderlichen Perforationstiefe im Allgemeinen geringer ist.

Ein Verfahren zur Herstellung eines schallabsorbierenden Elements umfasst:
a) Herstellen einer Verbund-Deckschicht wie zuvor in Ausführungsbeispielen beschrieben;
b) Bereitstellen einer Trägerschicht mit einer Vorderseite und einer Rückseite, wobei die Trägerschicht mehrere zwischen ihrer Vorderseite und ihrer Rückseite durchgängige Kanäle wie insbesondere Bohrungen, Waben oder Schlitzungen aufweist oder die Trägerschicht aus porösem, luftdurchlässigen Material besteht;
c) Verbinden der Rückseite der der Stützschicht mit der Vorderseite der Trägerschicht zu einem das schallabsorbierenden Element bildenden Schichtverbund, oder die Trägerschicht (1, 1') aus porösem, luftdurchlässigen Material besteht.

Das Verbinden der Rückseite der Stützschicht mit der Vorderseite der Trägerschicht erfolgt derart, dass im schallabsorbierenden Element zwischen Kanälen der Mikroperforation der Verbund-Deckschicht und der Rückseite der Trägerschicht kommunizierende Verbindungen zur Erzielung einer schallabsorbierenden Wirkung bestehen.

Die Trägerschicht kann zur Erzielung der erforderlichen Luftdurchlässigkeit zwischen ihrer Vorderseite und ihrer Rückseite durchgängige Kanäle wohldefinierter geometrischer Gestalt und insbesondere wohldefinierten Querschnitts aufweisen, wie dies etwa bei Bohrungen, Waben oder Schlitzungen der Fall ist. Das Verbinden der Verbund-Deckschicht und der Trägerschicht erfolgt dann derart, dass im schallabsorbierenden Element zwischen Kanälen der Mikroperforation der Verbund-Deckschicht und Kanälen der Trägerschicht kommunizierende Verbindungen zur Erzielung einer schallabsorbierenden Wirkung bestehen.

Die Verbund-Deckschicht und die Trägerschicht werden bevorzugt getrennt von einander hergestellt und erst in einem nachfolgenden Schritt miteinander verbunden. Dies ist fertigungstechnisch vorteilhaft. Insbesondere wird hier die Mikroperforation ausschliesslich in die Verbund-Deckschicht eingebracht und nicht auch in einen Bereich der Trägerschicht. Auch ermöglicht dieses Verfahren eine zeitlich und/oder räumlich getrennte Produktion und ggf. Lagerung. So ist die Herstellung der Verbund-Decksicht wegen insbesondere aufgrund der Mikroperforation und dem Schritt der Dickenreduktion technologisch aufwändiger und komplexer als die Herstellung einer Trägerschicht beispielsweise aus einem Gipsmaterial. Aufgrund ihres im Vergleich zu typischen Trägerschichten geringen Volumens und Gewichts lässt sich die vorgefertigte Verbund-Deckschicht sich jedoch günstig lagern und transportieren.

In einigen Ausführungsformen umfasst die Trägerschicht eine Wabenstruktur aus einem nicht brennbaren Material, insbesondere Aluminium. Die Waben weisen bevorzugt einen regelmässigen scheckigen Querschnitt, insbesondere mit einer Wabenweite im Bereich von 6mm bis 9mm, auf. Die Trägerschicht kann insbesondere aus einer solchen Wabenstruktur bestehen. Bezogen auf die Fläche der Trägerschicht können die Waben beispielsweise flächenfüllend, also lückenlos angesetzt sein. Alternativ können die Waben aber auch in äquidistanten Zeilen und spalten angeordnet sein, so dass sich jede Waben mit benachbarten Waben eine Wand teilt und alle Waben die gleiche Ausrichtung oder Orientierung aufweisen. In einer solchen Anordnung verbleiben zwischen diagonal benachbarten Waben Lücken von z. B. quadratischem Querschnitt, welche jedoch akustisch in gleicher weise wirksam sind wie die z. B. sechseckigen Waben.

Eine derartige Trägerschicht weist - in Vergleich zu alternativen Materialien wie Holzmaterialien (z. B. MDF, Mitteldichte Faserplatten) oder Gipsmaterialien ein sehr viel geringeres Gewicht auf und ist unter diesem Gesichtspunkt besonders günstig. Eine derartige Wabenstruktur kann ferner mit geringer Wandstärke realisiert werden. Dies führt dazu, dass alle oder zumindest nahezu alle Kanäle der Mikroperforation auch ohne spezielle weitere Massnahmen in kommunizierender akustischer Verbindung mit Kanälen der Trägerschicht stehen und damit für die Schallabsorbtion wirksam sind. Ferner ist eine derartige Wabenstruktur, z. B. aus Aluminium, mit geringen Toleranzen und insbesondere einer in Hinblick auf die Verbindung mit der Verbund-Deckschicht wünschenswerten grossen Ebenheit und Parallelität zwischen Ober- und Unterseite herstellbar. Die Wandstärke der Waben liegt vorteilhaft in einem Bereich 0.2mm und 0.5mm.

Fertigungstechnisch ist es ferner günstig, wenn die Stützschicht und die Trägerschicht aus dem gleichen oder zumindest ähnlichen Material bestehen, z. B. jeweils aus Aluminium. In diesem Fall erfolgt das Verbinden der Rückseite der Stützschicht mit der Vorderseite z. B. durch Verleimen oder Verkleben der Trägerschicht zwischen gleichen oder ähnlichen Materialien.

In weiteren Ausführungsformen umfasst die Trägerschicht eine Gipsfaserplatte odereine Gipskartonplatte und ist vorzugsweise eine Gipsfaserplatte oder eine Gipskartonplatte mit einer typischen Dicke im Bereich von z. B. 16mm bis 19mm. Die Kanäle in der Trägerplatte umfassen dabei beispielsweise Löcher mit einem kreisförmigen Querschnitt - also durchgängige Bohrungen - mit einem Durchmesser im Bereich von 5mm bis 10mm. Nach einem alternativen oder ergänzenden Kriterium macht eine durch die Kanäle der Trägerschicht gebildete offene Fläche einen Anteil von 20% bis 40% einer Gesamtfläche der Trägerschicht ausmacht. Alternativ oder zusätzlich zu zylindrischen Bohrungen können die Kanäle in der Trägerschicht auch aus Schlitzungen, Langlöchern etc. umfassen bzw. aus solchen bestehen.

Gipsfaserplatten und Gipskartonplatten sind, ebenso wie z. B. Aluminium, unbrennbar. Im Vergleich zu Strukturen wie den zuvor beschriebenen Aluminiumwaben weisen Trägerschichten aus Gipsmaterialien eine deutlich höhere Dichte bzw. Masse sowie eine relativ unebene Oberfläche auf. Vorteilhaft an der Verwendung von Gipsmaterialien sind eine breite Anwendung im Baubereich sowie geringe Kosten.

In weiteren Ausführungsformen ist es nicht erforderlich, dass die in die Trägerschicht zwischen ihrer Vorderseite und ihrer Rückseite durchgängige Kanäle wohldefinierter geometrischer Gestalt aufweist. Erforderlich ist lediglich, dass die Trägerschicht zwischen ihrer Vorderseite und Ihrer Rückseite luftdurchlässig ist. Daher kann die Trägerschicht aus einem aufgrund seiner Porosität luftdurchlässigen Material bestehen. Dabei kann die Trägerschicht insbesondere ganz oder teilweise aus einem gepressten und porösen Schichtstoffmaterial bestehen, beispielsweise aus gepresstem Polyester.

In einigen Ausführungsformen umfasst das Verfahren ferner ein Bereitstellen einer Zwischenschicht mit einer Vorderseite und einer Rückseite sowie ein Verbinden der Rückseite der Verbund-Deckschicht mit der Vorderseite der Zwischenschicht und ein Verbinden der Rückseite der Zwischenschicht mit der Vorderseite der Trägerschicht. Im Schichtverbund des schallabsorbierenden Elements ist die Zwischenschicht demnach zwischen der Verbund-Deckschicht und der Trägerschicht angeordnet und hält die Verbund-Deckschicht von der Trägerschicht beabstandet. Dabei erstellt die Zwischenschicht im Schichtverbund kommunizierende Verbindungen zwischen der Mikroperforation der Verbund-Deckschicht und den Kanälen der Trägerschicht. Die Zwischenschicht kann insbesondere derart gestaltet sein, dass sie Schall in allen Richtungen, also insbesondere auch quer bzw. schräg zur die Dicke bestimmenden Normalenrichtung leitet; auf diese weise kann die Zwischenschicht solche Kanäle der Mikroperforation, welche sich nicht unmittelbar über einem Kanal der Trägerschicht befinden, akustisch an die Trägerschicht ankoppeln.

Während - wie oben ausgeführt - z. B. die Verwendung einer Wabenstruktur aus Aluminium für die Trägerschicht eine sehr gute akustische Kopplung zwischen den Kanälen der Mikroperforation und den Kanälen der Trägerschicht ergibt, ist der Anteil der offenen Fläche z. B. für Trägerschichten aus gebohrten Gipsmaterialien deutlich geringer; entsprechend ist von der Vielzahl der Kanäle der Mikroperforation nur derjenige Teil unmittelbar wirksam, der sich über einem Kanal der Trägerschicht befindet, wodurch die Schallabsorbtion insgesamt etwas reduziert wird. Dem kann durch die Anordnung einer Zwischenschicht zwischen Verbund-Deckschicht und Trägerschicht entgegengewirkt werden. Je nach verwendeten Materialien kann eine Zwischenschicht weitere vorteilhafte Eigenschaften haben, insbesondere einen Ausglich einer möglicherweise unterschiedlicher thermischer Ausdehnung von Verbund-Deckschicht und Trägerschicht.

Eine solche Zwischenschicht kann insbesondere ein Gewebe, ein Geflecht, ein Gestricke, oder ein Gelege umfassen oder einem solchen bestehen. In weiteren Ausführungsformen umfasst eine derartige Zwischenschicht ein Textil welches Noppen und eine Textilschicht aufweist, ein Glasfasermaterial, ein Kohlefasermaterial, ein Aramid, einen porösen Schaum insbesondere aus Glas, Metall oder Keramik, ein gestanztes Profil aus Metall oder Kunststoff mit einer Prägung wie beispielsweise Noppen, Rauten, Pyramiden, Rillen, oder besteht aus einem solchen Material.

In einigen Ausführungsformen umfass das Verfahren ferner das Bereitstellen einer mikroperforierten Gegenzug-Schicht, wobei die Gegenzug-Schicht eine Vorderseite und eine Rückseite aufweist, und eine Verbinden der Rückseite der Trägerschicht mit der Vorderseite der Gegenzug-Schicht. Der das Schallabsorbierende Element bildenden Schichtverbund weist dann in derartigen Ausführungsformen zumindest eine Verbund-Deckschicht, eine Trägerschicht und eine Gegenzug-Schicht auf. Die Gegenzug-Schicht kann z. B. aus dem gleichen Material bestehen wie die Stützschicht, also beispielsweise aus einer mikroperforierten Aluminiumfolie.

Gemäss einem weiteren Aspekt wird eine nicht erfindungsgemäße mikroperforierte Verbund-Deckschicht für ein schallabsorbierendes Element offenbart. Eine solche mikroperforierte Verbund-Deckschicht kann eine nach einem zuvor und/oder nachfolgend in Ausführungsbeispielen beschriebenen Verfahren hergestellte mikroperforierte Verbunddeckschicht mit geschliffener Oberseite aufweisen, vorzugsweise eine solche mikroperforierte Verbund-Dickschicht sein.

Alternativ kann die mikroperforierte Verbund-Deckschicht einen Schichtverbund aus einer Dekorschicht und einer Stützschicht umfassen, wobei die Dekorschicht eine Schicht von CPL (Continuous Pressure Laminate) oder von Kunststoff, beispielsweise Polykarbonat, oder eine Schicht von Epoxydharz umfasst, vorzugsweise eine solcher Schichtverbund ist, wobei die Dekorschicht eine Dicke von höchstens 0.3mm besitzt und der Schichtverbund eine Gesamtdicke von 0.35mm bis 0.75mm besitzt. Die Mikroperforation ist in jedem Fall von der Vorderseite der Dekorschicht zur Rückseite der Stützschicht durchgehend. Die Stützschicht kann in derartigen Ausführungsformen aus gleichen Materialien bestehen wie zuvor beschrieben, insbesondere aus einer Aluminiumfolie und/oder einer Glasfaserkaschierung. Im Gegensatz zur Verwendung einer Dekorschicht aus Holzfurnier lassen sich Schichten bzw. Folien aus - grundsätzlich ebenfalls brennbarem - CPL oder Kunststoff unmittelbar in einer hinsichtlich des Brandschutzes genügend geringen Materialstärke bzw. Dicke herstellen, so dass sich ein separater Schritt der Dickenreduktion erübrigt. Im Vergleich zu CPL oder Kunststoff ist die alternative Verwendung einer Epoxydharzbeschichtung als Dekorschicht aus brandschutztechnischer Sicht sowie unter Kostengesichtspunkten vorteilhaft, im vorliegenden Einsatzgebiet aber noch wenig etabliert. Vorteilhaft beim Einsatz von Epoxydharz ist ferner, dass hier ein technologisch aufwändiges und kritisches Verkleben der Dekorschicht mit der (Aluminium-)Stützschicht entfällt.

Eine Verbund-Deckschicht. für ein schallabsorbierendes Element mit einer Dekorschicht von CPL (Continuous Pressure Laminate) oder von Kunststoff, beispielsweise Polykarbonat, oder von Epoxydharz, ist nach einem Verfahren, welches keinen Teil der Erfindung darstellt, herstellbar, welches die folgenden Schritte umfasst:
a) Bereitstellen einer Dekorschicht und einer Stützschicht mit jeweils einer Vorderseite und einer Rückseite, wobei die Dekorschicht ein Schicht von CPL (Continuous Pressure Laminate) oder von Kunststoff, beispielsweise Polykarbonat umfasst, vorzugsweise eine solche Schicht ist und eine Dicke von höchstens 0.2mm besitzt
b) Verbinden der Rückseite der Dekorschicht und der Vorderseite der Stützschicht zu einem die Verbund-Deckschicht bildenden Schichtverbund mit einer Gesamtdicke von 0.35mm bis 0.75mm;
d) Versehen der Verbund-Deckschicht mit einer Mikroperforation aus zwischen der Vorderseite der Dekorschicht und der Rückseite der Stützschicht durchgängigen Kanälen definierter Querschnittsgeometrie.

Die Dekorschicht kann unmittelbar separat als flächiges Gebilde bereitgestellt werden, insbesondere als Folie. Alternativ kann sie aber auch in flüssiger Form bereitgestellt und anschliessend durch ein grundsätzlich bekanntes Verfahren, insbesondere Tauch, Sprühen oder Walzenauftrag, auf die Stützschicht aufgebracht werden, wo sie die endgültige flächige Form einer Schicht ausbildet. Aufgrund der Bereitstellung der Stützschicht in flächiger Form erscheint hierfür ein sogenanntes Coil-Coating-Verfahren als besonders vorteilhaft. Hierbei wird die zu beschichtenden Stützschicht zunächst in Rollenform bereitgestellt, für den Beschichtungsvorgang automatisiert entrollt und im Anschluss an die Beschichtung wieder gerollt. Im Beschichtungsvorgang selbst wird zumindest die Vorderseite der Stützschicht beschichtet. Alternativ kann aber auch eine beidseitige Beschichtung erfolgen.

Weitere Aspekte und spezielle Ausführungsformen einer Verbund-Deckschicht mit einer Schicht von CPL oder Kunststoff oder Epoxydharz sowie entsprechender Herstellungsverfahren ergeben sich unmittelbar in analoger Weise zu entsprechenden Aspekten und Ausführungsformen mit einer nach der Herstellung des Schichtverbundes reduzierten Dicke der Dekorschicht.

Gemäss einem weiteren Aspekt wird ein nicht erfindungsgemäßes schallabsorbierendes Element offenbart. Das schallabsorbierende umfassend einen Schichtverbund mit einer mikroperforierten Verbund-Deckschicht mit einer Dekorschicht von durch Schleifen reduzierten Dicke oder einer Dekorschicht mit einem CPL (Continuous Pressure Laminate) oder einem Kunststoff, beispielsweise Polycarbonat, oder einer Dekorschicht mit einem Epoxydharz. Das schallabsorbierende Element umfasst ferner eine Trägerschicht mit einer Vorderseite und einer Rückseite, wobei die Trägerschicht mehrere zwischen ihrer Vorderseite und ihrer Rückseite durchgängige Kanäle wie insbesondere Bohrungen, Waben oder Schlitzungen aufweist. Zwischen Kanälen der Mikroperforation der Verbund-Deckschicht und Kanälen der Trägerschicht bestehen kommunizierende Verbindungen zur Erzielung einer schallabsorbierenden Wirkung.

Ein flächenbezogener Brennwert des schallabsorbierenden Elements im Verbund überschreitet einen Brennwert-Schwellwert von 4MJ/m², nicht. Dies entspricht den Anforderungen der Brandschutzklasse A2 gemäss der Norm EN 13501-1. In gleicher Weise kann der Brennwert-Schwellwert gemäss einer anderen gewünschten Brandschutzklasse festgelegt werden.

In einigen Ausführungsformen umfasst das schallabsorbierende Element ferner ein mit der Stützschicht galvanisch verbundenes oder durch einen Teil der Stützschicht gebildetes Anschlusselement zur Herstellung einer galvanischen Verbindung der Stützschicht mit einer elektromagnetischen Schirmschaltung.

Das Anschlusselement kann z. B. durch eine in ein oder mehrere Kanten eingearbeitete Nut oder mehrere Nuten umfassen, welche z. B. durch Umfalzen von Rändern Kanten der Stützschicht erfolgen kann und in welche nach der Montage z. B. Kontaktfern oder Kontaktlaschen eingreifen. In ähnlicher Weise kann das Anschlusselement über die übrigen Bestandteile des Schallschutzelementes Überstehende Laschen, Federn für eine galvanische Nut-Feder-Verbindung oder sonstige grundsätzlich bekannte galvanische Kontaktelemente umfassen. So sind Schallschutzelemente mitunter mit einem Nut-Feder-System ausgestattet, durch welche vergleichsweise kleine Einzelelemente zu einer grossflächigen durchgängigen Struktur, beispielsweise einer Decken- oder Wandverkleidung, zusammensetzt werden können. Ein derartiges Nut-Federsystem kann beispielsweise galvanische Anschlusselemente integrieren. Ein in einigen Ausführungen des Schallschutzelementes an einer, mehrerer oder aller Kanten - d. h. senkrecht zur flächigen Ausdehnung - angeordnetes metallisches Kantenelement kann unmittelbar als Anschlusselement genutzt werden.

Die elektromagnetische Schirmschaltung kann weitere Schallschutzelemente und/oder sonstige aktive/und/oder passive elektromagnetische Schirmvorrichtungen oder Schirmschaltungen umfassen. Ferner kann über das Kontaktelement - direkt oder über weitere zwischengeschaltete Elemente - eine galvanische Verbindung zu einer Erdungsanlage, beispielsweise einem Fundamenterder erfolgen.

Gemäss einem weiteren Aspekt, der keinen Teil der Erfindung darstellt, wird die Verwendung eines schallabsorbierenden Elements sowohl zur Absorption von Schallenergie als auch zur elektromagnetischen Schirmung offenbart.

Dabei wird die aus den zuvor bereits erwähnten Gründen bereits vorhanden Stützschicht, zusätzlich als elektromagnetisches Schirmelement eingesetzt. Insbesondere niederfrequente elektromagnetische Wellen, beispielsweise mit einer Frequenz von 50HZ oder 60HZ des öffentlichen Netzes, gehen durch die dekorativen Schichten wie Holz, CPL, Kunststoff oder Epoxydharz ohne Minderung hindurch. In einer metallischen Stützschicht werden hierdurch Wirbelströme induziert und die Energie des elektromagnetischen Feldes in grundsätzlich bekannter Weise in thermische Energie, d. h. Wärme, umgesetzt. Ein derartig eingesetztes schallabsorbierendes Element setzt demnach sowohl unerwünschte Schallenergie als auch unerwünschte Energie eines inhärent praktisch immer vorhandenen elektromagnetischen Feldes in Wärme um. Schallabsorber eignen sich als Abschirmung von Elektromagnetischen-Niederfrequenz-Feldern im Raum deshalb gut, weil Schallabsorption und Elektroabsorption beide grosse Flächen mit geeigneten Materialien erfordern. Auf diese Weise lässt sich ein Raum oder Saal, beispielsweise ein Konzertsaal oder Konferenzsaal oder Besprechungsraum, durch Auskleidung mit schallabsorbierenden Elementen zugleich elektromagnetisch zumindest teilweise schirmen.

Bei entsprechendem Erfordernis kann die Stützschicht, beispielsweise hinsichtlich Dimensionierung und/oder Materialauswahl sowie ihre Formgebung in Hinblick auf die Abschirmung elektromagnetischer Felder nach in diesem technischen Gebiet grundsätzlich bekannten Verfahren und verbessert bzw. optimiert werden.

Gemäss einem weiteren Aspekt wird ein nicht erfindungsgemäßes Verfahren zur Herstellung einer mikroperforierten Verbund-Deckschicht für ein schallabsorbierendes Element, offenbart, das Verfahren umfassend:
a) Bereitstellen einer flächigen Stützschicht mit einer Vorderseite und einer Rückseite;
b) Bereitstellen eines Beschichtungsmaterials;
c) Flächiges Beschichten der Stützschicht mit einer Dekorschicht aus Beschichtungsmaterial, so dass die Dekorschicht eine Oberseite und eine Unterseite aufweist und die Stützschicht und die Dekorschicht gemeinsam einen die Verbund-Deckschicht bildenden Schichtverbund bilden, wobei das Aufbringen der Dekorschicht auf die Stützschicht im Coil-Coating-Verfahren erfolgt,
d) Versehen der Verbund-Deckschicht mit einer Mikroperforation aus zwischen der Vorderseite der Dekorschicht und der Rückseite der Stützschicht durchgängigen Kanälen definierter Querschnittsgeometrie.

Eine auf diese Weise hergestellte Verbund-Deckschicht lässt sich in der gleichen Weise einsetzten wie die zuvor beschriebenen Verbund-Deckschicht. Daher gelten weitere die Verbund-Deckschicht betreffenden Offenbarungen, beispielsweise hinsichtlich Geometrie und Dimensionierung, in gleicher Weise. Selbiges gilt für schallabsorbierenden Elemente mit einer im Coil-Coating-Verfahren hergestellten Verbund-Decksicht.

Gemäss einem weiteren Aspekt wird eine nicht erfindungsgemäße Verwendung des Coil-Coating-Verfahrens zur Herstellung einer mikroperforierten Verbunddeckschicht für ein schallabsorbierendes Element offenbart, wobei eine flächige Stützschicht im Coil-Coating-Verfahren mit einem Beschichtungsmaterial flächig beschichtet wird und auf der Stützschicht eine Dekorschicht ausbildet.

Gemäss einem weiteren bevorzugten Aspekt wird die Aufgabe durch die Verwendung einer Schicht aus einem Harzmaterial, insbesondere aus Epoxydharz, Phenolharz oder Melaninharz, als Stützschicht oder Teil der Stützschicht bei der zuvor beschriebenen Herstellung einer mikroperforierten Verbunddeckschicht und/oder eines schallabsorbierenden Element der zuvor in Ausführungsbeispielen beschriebenen Art offenbart.

Die mindestens eine Schicht aus Harzmaterial dient dabei zur Schmierung eines Werkzeugs, mit welchem die Verbund-Deckschicht mit der Mikroperforation versehen wird.

### Kurze Beschreibung der Zeichnungen

Nachfolgend werden beispielhafte Ausführung der vorliegenden Erfindung anhand eines Beispieles beschrieben. Das Beispiel der Ausführung wird durch die folgenden beigelegten Figuren illustriert:
- Figur 1a, 1b, 1c, 1d:: zeigen wesentliche Schritte bei der Herstellung einer mikroperforierten Verbund-Deckschicht.
- Figur 2:: zeigt ein schallabsorbierendes Element mit einer Verbund-Deckschicht.
- Figur 3:: zeigt einen Abschnitt eines schallabsorbierenden Elementes in einer dreidimensionalen Schnittansicht.
- Figur 4:: zeigt einen Abschnitt eines weiteren schallabsorbierenden Elementes in einer dreidimensionalen Schnittansicht.
- Figur 5:: zeigt einen Abschnitt eines weiteren schallabsorbierenden Elementes in einer dreidimensionalen Schnittansicht.
- Figur 6a, 6b:: zeigen Ausführungsformen einer Verbund-Deckschicht.

### Ausführungsbeispiele

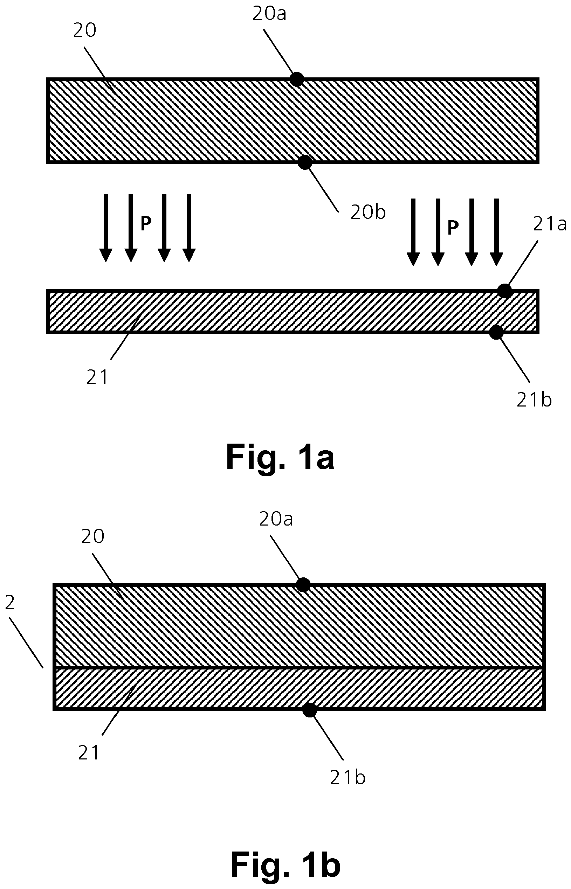

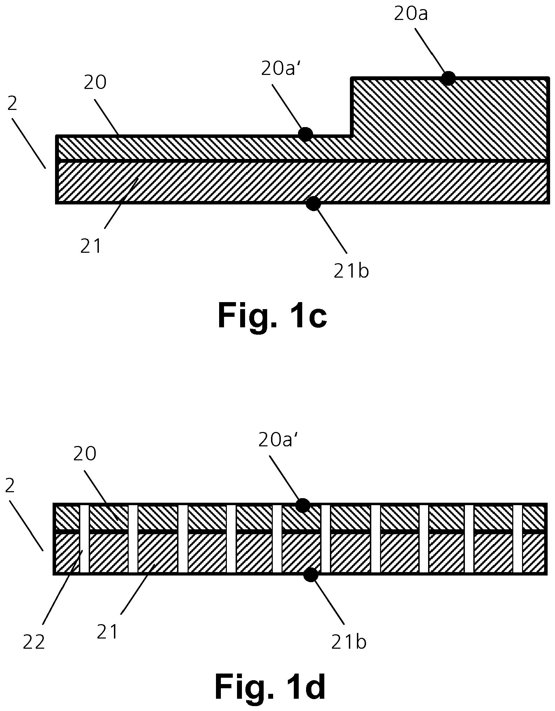

Mit Bezug auf die Figuren 1a, 1b, 1c, 1d werden nachfolgend die Schritte der Herstellung einer mikroperforierten Verbund-Deckschicht entsprechend dargestellt.

Figur 1a zeigt schematisch einen Ausschnitt aus einer Dekorschicht 20 und einer separat bereitgestellten Stützschicht 21 in einer Querschnittsansicht. Die Dekorschicht weisst eine Vorderseite 20a und eine Rückseite 20b auf. Die Stützschicht weisse eine Vorderseite 21a und eine Rückseite 21b auf.

Die Dekorschicht 20 besteht aus einem Holzfurnier von 0.6mm bis 0.8mm Dicke, die Stützschicht aus einer Aluminiumfolie von 0.1mm bis 0.25mm Dicke oder aus einer Glasfaserkaschierung.

Ausgehend von der in Figur 1a dargestellten Konfiguration wird die Rückseite 20b mit der Vorderseite 21a der Stützschicht 21 dauerhaft verbunden, was in bekannter Weise mittels einer formschlüssigen Verbindung durch Verkleben oder Verleimen erfolgt. Dabei wird die Dekorschicht 20 relativ zur Stützschicht 20 in der durch die Pfeile "P" gekennzeichnete Richtung bewegt, bis sie auf der Stützschicht aufliegt, und mit dieser z. B. unter Anwendung von Druck und/oder Wärme verleimt. Selbstverständlich kann die Dekorschicht 20 auch in anderer Form bereitgestellt werden, z. b. in Rollenform und durch Abwickeln o. ä. auf die Stützschicht aufgebracht werden. Durch das Verbinden der Dekorschicht 20 mit der Stützschicht 21 ergibt sich ein die Verbund-Decksicht 2 bildende Schichtverbund, wie in Figur 1b dargestellt.

Im Anschluss an das Verbinden der Dekorschicht 20 mit der Stützschicht 21 wird die Dicke der Dekorschicht durch flächiges Abschleifen reduziert, wodurch die Dekorschicht 20 die endgültige Vorderseite 20a' erhält. Figur 1c zeigt eine Konfiguration, in der in einem (linken) Teil die Dekorschicht 20 bereits auf ihre endgültige Dicke und die endgültige Vorderseite 20a' erhalten at, während ein (rechter) Teil noch die ursprüngliche Dicke und die ursprüngliche Vorderseite 20a aufweist.

Die Dickenreduktion der Dekorschicht 20 erfolgt unter Berücksichtigung des im Endzustand zulässigen flächenbezogenen Brennwertes auf einen Wert von z. B. 0.3mm bis 0.4mm. Nach der Reduktion ihrer Dicke weist die Dekorschicht 20 als solche keine ausreichende Eigenstabilität für die nachfolgende Handhabung und Verarbeitung mehr auf. Statt dessen wird die mechanische Stabilität durch die fest verbundene Stützschicht 21 gewährleistet.

Im Anschluss an die Dickenreduktion wird die Verbund-Deckschicht 2 mit einer von der Vorderseite 20a' zur Rückseite 21b durchgängigen Mikroperforation mit Kanälen 22 versehen. Die Mikroperforation kann durch an sich bekannte Verfahren wie Walzen, Stanzen, Nadeln, Wasserstrahl- oder Laserschneiden in die Verbund-Deckschicht 2 eingebracht werden. Dabei gewährleistet die Stützschicht 21 eine für die Herstellung der Mikroperforierung ausreichende mechanische Stabilität der Verbund-Deckschicht 2, trotz der geringen Dicke der Dekorschicht 20. Alternativ können die Schritte der Dickenreduktion der Dekorschicht 20 und des Einbringens der Mikroperforation in ihrer Reihenfolge vertauscht werden. In diesem Fall wird entsprechend zunächst die Mikroperforation mit den Kanälen 22 vorgenommen, wobei die Dekorschicht noch ihre ursprüngliche Dicke aufweist. Anschliessend erfolgt die Dickenreduktion der Stützschicht in der zuvor beschriebenen Weise.

Wie bereits in der allgemeinen Beschreibung der Erfindung erläutert, sind die einzelnen nicht notwendigerweise zylindrisch, sondern können z. B. auch schlitzförmig sein.

Ferner ist es grundsätzlich möglich, das Einbringen der Mikroperforation unmittelbar nach dem Verbinden der Dekorschicht 20 und der Stützschicht 21 vorzunehmen, d. h. zwischen den in Figur 1b und Figur 1c dargestellten Zuständen.

In Anschluss können ferner weitere optionale Schritte folgen, insbesondere das Aufbringen einer Lackierung auf die Vorderseite 20a'.

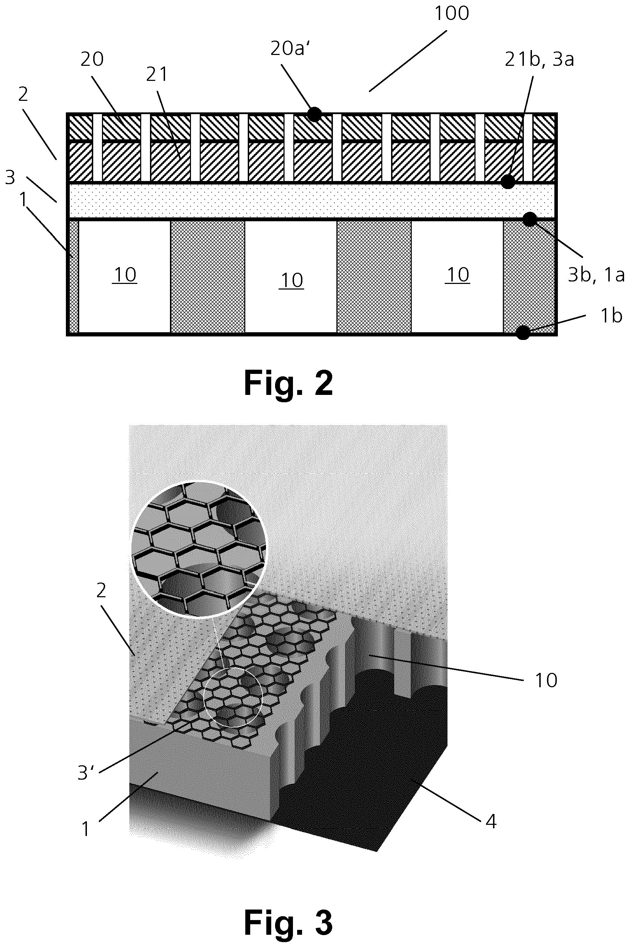

Nachfolgend wird zusätzlich auf Figur 2 Bezug genommen. Figur 2 zeigt ein exemplarisches schallabsorbierendes Element 100, welches aus einem Schichtverbund mit einer Verbund-Deckschicht 2, einer optionalen Zwischenschicht 3 sowie einer Trägerschicht 1 besteht. Ebenso wie in Figur 1a - 1d sind die Grössenverhältnisse der einzelnen dargestellten Elemente nicht streng massstäblich. Statt dessen wurden die Grössenverhältnisse in Hinblick auf eine klare und einfache Darstellung gewählt.

Die Verbund-Deckschicht 2 umfasst die Dekorschicht 20 und die Stützschicht 21 und entspricht mit Bezug auf Figur 1a - 1d beschriebenen Verbund-Deckschicht. Die Verbund-Deckschicht 2, die Zwischenschicht 3 und die Trägerschicht 1 sind mit einander - ebenso wie die Dekorschicht 20 und die Stützschicht 21 der Verbund-Deckschicht 2 - dauerhaft, insbesondere stoffschlüssig, mit einander verbunden, beispielsweise durch Kleben bzw. Leimen. So ist die Rückseite der 21b der Stützschicht 21 dauerhaft mit der Vorderseite 3a der Trägerschicht 3 verbunden; di Rückseite 3b der Zwischenschicht 3 ist dauerhaft mit der Vorderseite 1a der Trägerschicht 1 verbunden. In beispielhaften Ausführungsformen wird die optionale Zwischenschicht durch eine Aramid-Schicht mit einer Dicke von 1mm gebildet. Wie in der allgemeinen Beschreibung erwähnt, kann für die optionale Zwischenschicht aber auch eine Reihe anderer Materialien zum Einsatz kommen. Bei in Hinblick auf den Brandschutz besonders günstigen Ausführungsformen weist die Zwischenschicht 2 einen geringen flächenbezogenen Brennwert und liefert auf somit einen geringen oder sogar vernachlässigbar kleinen Beitrag zur Brandlast des schallabsorbierenden Elements 100.

Die Trägerschicht 1 ist exemplarisch beispielhaft aus Gipsfaser gefertigt und mit Rasterbohrungen von z. B. 5.0mm bis 10.0mm Lochdurchmesser versehen, so dass eine Durchgangsfläche von 20 oder 40 % resultiert. Generell kann die Trägerschicht 1 eine Gipsfaserplatte oder eine Gipskartonplatte oder ein Aluminiumelement umfassen. Die Kanäle 10 sind nicht notwendigerweise kreisförmig, sondern können - z. B. bei Verwendung eines Aluminium-Wabenelementes für die Trägerschicht 1 - wabenförmig, z. B. sechseckig sein. Ebenso können sie z. B. die Form von Schlitzungen mit rechteckigem oder quadratischen Querschnitt oder von Langlöchern aufweisen.

Da die Trägerplatte 1 bei üblicher Auslegung den deutlich grössten Anteil am Gesamtvolumen des Elementes 100 ausmacht, sind eine geringer oder am besten vernachlässigbarer flächenbezogener Brennwert und eine entsprechend geringe oder vernachlässigbare Brandlast für das Material der Trägerschicht 1 bedeutsam.

Alternativ kann die Trägerschicht 1 auch aus einem gepressten und porösen Schichtstoffmaterial hergestellt sein, beispielsweise aus gepresstem Polyester. In diesem Fall sind die Kanäle 10 nicht als zwischen der Vorderseite 1a und der Rückseite 1b der Trägerplatte 1 geradlinig durchgehende Kanäle ausgebildet. Stattdessen ergeben sich die Luftdurchlässigkeit der Trägerplatte 1 aus der porösen Werkstoffstruktur.

In Figur 2 ist die Trägerschicht 1 zusammen mit einer Verbund-Deckschicht und einer optionalen Zwischenschicht 3 dargestellt. In dieser Form kann das schallabsorbierende Element 100 z. B. als Wand-oder Deckenverkleidungselement in Verbindung mit einer Absorptionsschicht aus Fasermaterial und/oder einem schallharten Untergrund für die Rückseite 1b verwendet werden.

Ebenso ist es jedoch möglich, eine Anordnung mit ggf. einer weiteren optionalen Zwischenschicht 3 und einer weitern Verbund-Deckschicht 2 in gegenüber Figur 2 gespiegelter Anordnung mit der Rückseite 1b der Trägerschicht 1 zu verbinden. Auf diese Weise ergibt sich ein symmetrischer Aufbau, dessen beiden äusseren Oberflächen jeweils durch eine Dekorschicht gebildet werden; dies ist z. B. für als Raumteiler verwendete Schallschutzwände oder Raum- oder Schranktüren vorteilhaft.

Alternativ zur obigen Darstellung kann bei dem in Figur 2 dargestellten Schallschutzelement die Dekorschicht 20 auch aus einer CPL-Schicht oder einer Kunststoffschicht, beispielsweise einer Polycarbonat-Schicht von z. B. 0.2mm Dicke, bestehen. Diese kann ummittelbar in der gewünschten Enddicke hergestellt werden, so dass sich eine Reduktion ihrer Dicke nach dem Verbinden mit der Stützschicht 1 erübrigt, was allerdings keinen Teil der Erfindung darstellt. In einer weiteren alternative besteht die Dekorschicht 20 aus einer z. B. im Coil-Coating-Verfahren aufgebrachten Epoxydharzschicht.

Figur 3 zeigt einen Abschnitt eines schallabsorbierenden Elementes in einer dreidimensionalen Schnittansicht mit massstäblichen Grössenverhältnissen. Der in Figur 3 dargestellte Schichtaufbau entspricht dem Aufbau von Figur 2, wobei die Zwischenschicht 3' aus einer Aluminium-Wabenstruktur mit flächenfüllend, d. h. lückenlos, angeordneten sechseckigen Waben besteht. Unterhalb der Trägerschicht 2, d. h. unmittelbar angrenzend an die Rückseite der Trägerschicht 2, ist eine Schallharte Wand 4 angeordnet. Diese ist jedoch nicht notwendig Teil des schallabsorbierenden Elements selbst, sondern kann z. B. eine Betonwand oder Betondecke sein. Alternativ oder zusätzlich kann ein eine Schicht aus passivem Absorbermaterial, wie einem Fasermaterial, beispielsweise eine Mineralfaserschicht, vorhandne sein.

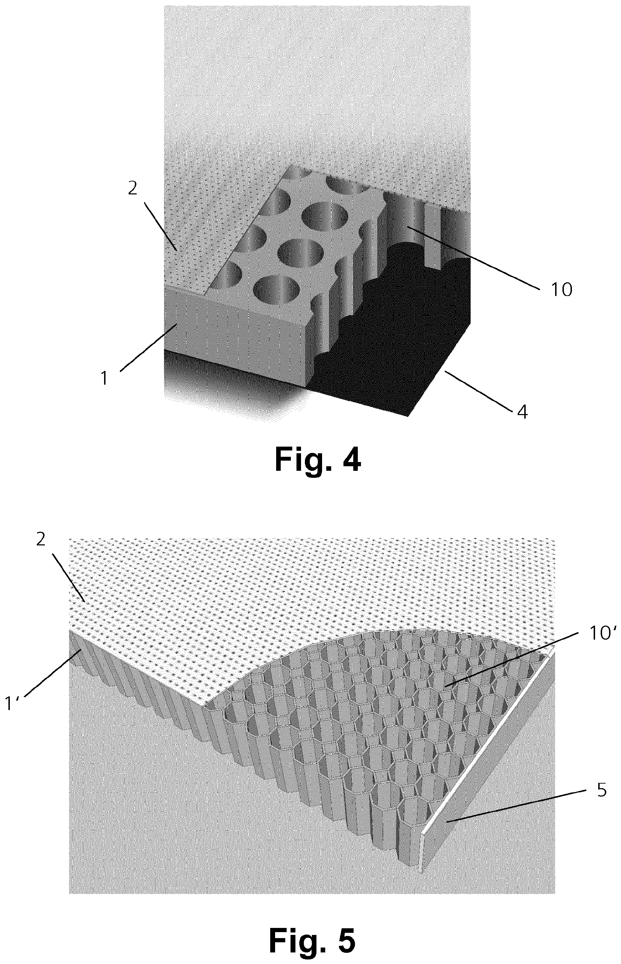

Figur 4 zeigt eine einen Abschnitt eines weiteren schallabsorbierenden Elementes in der gleichen Darstellung wie Figur 3. Die in Figur 4 gezeigte Ausführungsform unterscheidet sich von der in Figur 3 gezeigten Ausführungsform lediglich dadurch, dass in der Ausführungsform gemäss Figur 4 die Zwischenschicht 3 nicht vorhanden ist. Entsprechend ist die Rückseite der Verbunddeckschicht 2 unmittelbar auf der Vorderseite der Trägerschicht 1 angeordnet und mit dieser - abgesehen von einer dünnen Klebschicht - unmittelbar in Kontakt.

Figur 5 zeigt eine einen Abschnitt eines weiteren schallabsorbierenden Elementes in der gleichen Darstellung wie Figur 3. Während hinsichtlich der Verbund-Deckschicht 2 kein Unterschied zu den in Figur 3 und Figur 4 gezeigten Ausführungsformen besteht, ist die Trägerschicht 1' in dieser Ausführungsform als Aluminium-Wabenelement ausgeführt. Die einzelnen sechseckigen Waben 10' sind dabei in Zeilen und Spalten so angeordnet, dass benachbarte Waben 10' jeweils eine Seiten gemeinsam haben, wobei die einzelnen Waben zueinander verschoben aber nicht verdreht sind, also eine gemeinsame Orientierung haben. Auf diese Weise entstehen zwischen den einzelnen sechseckigen Waben 10' quadratische Kanäle 10", welche jedoch bezüglich der akustischen Kopplung zwischen Verbund-Decksicht 2 und Trägerschicht 1' die gleiche Wirkung haben wie die Waben 10'. Alternativ könnte die Trägerschicht 1' jedoch hinsichtlich ihrer Struktur auch so ausgeführt sein wie die in Figur 3 gezeigte Zwischenschicht 3'.

In Figur 5 ist weiterhin eine optionales streifenförmiges Randbegrenzungselement oder Kantenelement 5 dargestellt, welche ebenfalls aus Aluminium bestehen kann. Bei galvanischer Verbindung mit der Stützschicht der Verbund-Deckschicht 2 kann das Kantenelement 5 zugleich als Anschlusselement dienten.

Wenngleich in Figur 5 nicht dargestellt, kann der Rückseite der Trägerschicht 1' eine optionale Gegenzug-Schicht angeordnet sein, welche - wie in der allgemeinen Beschreibung dargestellt - wie die Stützschicht der Verbunddeckschicht 2 - aus einen mikroperforierten Aluminiumfolie bestehen kann.

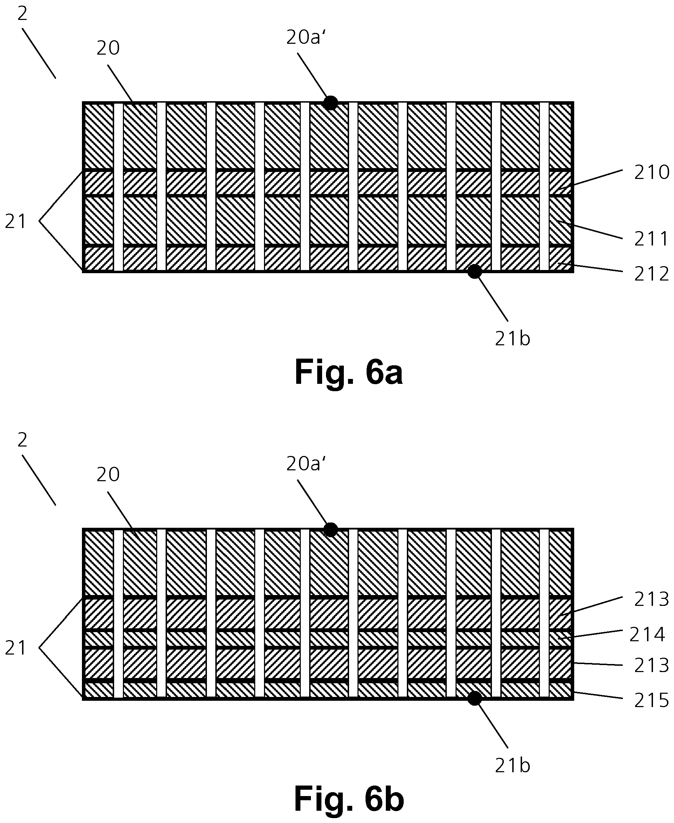

Figur 6a zeigt eine weitere beispielhafte Ausführungsform einer mikroperforierten Verbund-Deckschicht 2, welche sich von den zuvor beschriebenen Ausführungsformen im Aufbau der Stützschicht 21 unterscheidet. Die Verbund-Deckschicht 2 nach Figur 6a wird durch einen Schichtverbund gebildet, bei dem eine Aluminiumfolie 211 eine Mittelschicht bildet, die zwischen weiteren Schichten 210, 212 angeordnet ist. Die Schicht 210 ist eine Harzschicht aus einem Harzleim, insbesondere Phenolharz oder Melaninharz und besitzt im ausgehärteten Zustand Duroplastische Eigenschaften. Wie zuvor beschrieben wird hierdurch aufgrund der Härte der Harzschicht Schicht 210 die Oberflächenqualität der Dekorschicht 20 und insbesondere die Qualität der Mikroperforation verbessert. Ferner dient die Harzschicht 210 der Trockenschmierung bei der Einbringung der Mikroperforation, insbesondere durch Stanzen. Rückseitig ist die Aluminiumfolie 211 mit einer Vliesschicht 212 kaschiert, welche die Verleimung mit der Zwischenschicht oder Trägerschicht verbessert. Alternativ zur Aluminiumfolie 211 und einer separaten Harzschicht 210 kann eine Glasfaserkaschierung mit in ein Harzbett eingebetteten Glasfasern eingesetzt werden.

Zur Herstellung der Verbund-Deckschicht nach Figur 6b wird die gesamte Sandwich-Struktur vor dem Schleifen in einer Presse ausgehärtet, wobei das Härten z. B. bei einer Temperatur von beispielhaft 120°C mit einem Druck von 5N/mm² für eine Dauer von 8min erfolgen kann. Die Gesamtdicke der Verbund-Deckschicht 2 nach der Dickenreduktion der Dekorschicht 20 kann beispielhaft im Bereich von 0.4mm bis 0.8mm liegen.

Figur 6b zeigt eine weitere beispielhafte Ausführungsform einer mikroperforierten Verbund-Deckschicht 2, die sich von der Ausführungsform nach Figur 6a durch einen andersartigen Aufbau der Stützschicht 21 unterscheidet.

Bei der Ausführungsform nach Figur 6b wird die Stützschicht 21 ebenfalls durch einen Schichtverbund gebildet. Dieser umfasst beispielhaft zwei Melaninharz-Leimschichten 213, zwischen denen eine Vliesschicht 214 angeordnet ist. Die rückseitige Melaninharz-Leimschicht 213 ist mit einer Papierkaschierung 215 versehen, wobei eine Vlieskaschierung ebenfalls möglich ist. Bei dieser Ausführungsform ohne Metallfolie steht nicht so sehr der Brandschutz, sonder insbesondere die optische Qualität der Dekorschicht-Oberfläche 20a' und der Mikroperforation im Vordergrund.

Die Herstellung der Verbund-Deckschicht 2 nach Figur 6b kann in der gleichen Weise erfolgen wie zuvor in Hinblick auf Figur 6a beschrieben. Die Gesamtdicke der Verbund-Deckschicht 2 nach der Dickenreduktion der Dekorschicht 20 kann beispielhaft im Bereich von 0.6mm bis 0.9mm liegen, wovon beispielsweise 0.5mm oder weniger auf die Dekorschicht nach ihrer Dickenreduktion 20 entfallen.

## Patentansprüche

1. Verfahren zur Herstellung einer mikroperforierten Verbund-Deckschicht. (2) für ein schallabsorbierendes Element (100), das Verfahren umfassend:
a) Bereitstellen einer Dekorschicht (20) und einer Stützschicht (21) mit jeweils einer Vorderseite (20a, 21a) und einer Rückseite (20b, 21 b);
b) Verbinden der Rückseite der Dekorschicht (20) und der Vorderseite der Stützschicht (21) zu einem die Verbund-Deckschicht. (2) bildenden Schichtverbund;
c) Reduktion einer Dicke der Dekorschicht (20) von einer Anfangsdicke d₀ auf eine Enddicke d₁ durch flächiges Abtragen eines Teils der Dekorschicht (20) von ihrer Vorderseite (20a) her;
d) Versehen der Verbund-Deckschicht. (2) mit einer Mikroperforation aus zwischen der Vorderseite (20a) der Dekorschicht (20) und der Rückseite (21b) der Stützschicht (21) durchgängigen Kanälen (22) definierter Querschnittsgeometrie;
wobei die Reduktion der Dicke der Dekorschicht (20) nach dem Schritt des Verbindens der Dekorschicht (20) und der Stützschicht (21) erfolgt und wobei die Enddicke der Dekorschicht d₁ höchstens 0.6 mm beträgt, und wobei die Dekorschicht ein Holzfurnier und die Stützschicht ein nichtbrennbares Element umfasst;
**dadurch gekennzeichnet, dass** durch die Reduktion der Dicke der Dekorschicht (20) eine substantielle Reduktion eines flächenbezogenen Brennwertes der Verbund-Deckschicht erfolgt, wobei die Enddicke der Dekorschicht d₁ mindestens 10% geringer ist als die Anfangsdicke der Dekorschicht d₀ und bevorzugt mindestens 20% geringer als die Anfangsdicke der Dekorschicht d₀ ist.

2. Verfahren nach Anspruch 1, wobei die Dekorschicht (20) ein Holzfurnier ist.

3. Verfahren nach einem der Ansprüche 1 bis 2, wobei die Stützschicht (21) Aluminiumfolie umfasst, vorzugsweise aus Aluminiumfolie besteht.

4. Verfahren nach einem der Ansprüche 1 bis 3, wobei die Stützschicht mindestens eine Schicht aus einem Harzmaterial, insbesondere aus Epoxydharz, Phenolharz oder Melaninharz, und/oder eine Schicht aus einer Glasfaserkaschierung umfasst.

5. Verfahren nach Anspruch 4, das Verfahren umfassend: während des Versehens der Verbunddeckschicht (2) mit der Mikroperforation ein Schmieren eines Werkzeugs, mittels welchem die Mikroperforation eingebracht wird, durch die Stützschicht, insbesondere ein Harzmaterial der Stützschicht.

6. Verfahren nach einem der Ansprüche 1 bis 5, das Verfahren ferner umfassend: Festlegen eines flächenbezogenen Brennwert-Schwellwerts und Bemessen der Enddicke d₁ so, dass ein flächenbezogener Brennwert der Verbund-Deckschicht. (2) den Brennwert-Schwellwert nicht überschreitet.

7. Verfahren nach einem der Ansprüche 1 bis 6, wobei die Kanäle (22) der Mikroperforation aus Löchern mit einem kreisförmigen Querschnitt mit einem Durchmesser im Bereich von 0.2mm bis 1mm besteht und/oder eine durch die Kanäle (22) der Mikroperforation gebildete offene Fläche einen Anteil von 1% bis 10% einer Gesamtfläche der Verbund-Deckschicht. (2) ausmacht.

8. Verfahren nach einem der Ansprüche 1 bis 7, wobei das Versehen der Verbund-Deckschicht mit der Mikroperforation nach Reduktion der Dicke der Dekorschicht (20) erfolgt.

9. Verfahren nach einem der Ansprüche 1 bis 8, wobei die Reduktion der Dicke der Dekorschicht (20) durch Schleifen erfolgt.

10. Verfahren zur Herstellung eines schallabsorbierenden Elements (100), das Verfahren umfassend:
a) Herstellen einer Verbund-Deckschicht. (2) nach einem der Ansprüche 1 bis 9;
b) Bereitstellen einer Trägerschicht (1, 1') mit einer Vorderseite (1a) und einer Rückseite (1b), wobei die Trägerschicht (1) mehrere zwischen ihrer Vorderseite (1a) und ihrer Rückseite (1b) durchgängige Kanäle (10, 10', 10") wie insbesondere Bohrungen, Waben oder Schlitzungen aufweist oder die Trägerschicht (1, 1') aus porösem, luftdurchlässigen Material besteht;
c) Verbinden der Rückseite (21b) der der Stützschicht (21) mit der Vorderseite (1a) der Trägerschicht (1, 1') zu einem das schallabsorbierenden Element (100) bildenden Schichtverbund;
wobei das Verbinden der Verbund-Deckschicht. (2) und der Trägerschicht (1, 1') derart erfolgt, dass im schallabsorbierenden Element (100) zwischen Kanälen (22) der Mikroperforation der Verbund-Deckschicht. (2) und der Rückseite (1b) der der Trägerschicht (1, 1') kommunizierende Verbindungen zur Erzielung einer schallabsorbierenden Wirkung bestehen.

11. Verfahren nach Anspruch 10, wobei die Trägerschicht (1') eine Wabenstruktur aus einem nicht brennbaren Material, insbesondere Aluminium, umfasst, vorzugsweise eine Wabenstruktur aus einem nicht brennbaren Material ist, und die Waben (10') einen regelmässigen sechseckigen Querschnitt, insbesondere mit einer Wabenweite im Bereich von 6mm bis 9mm, aufweisen.

12. Verfahren nach einem der Ansprüche 10 oder 11, wobei die Trägerschicht (1) eine Gipsfaserplatte oder eine Gipskartonplatte umfasst, vorzugsweise eine Gipsfaserplatte oder eine Gipskartonplatte ist, und die Kanäle der Trägerschicht (1) aus Löchern mit einem kreisförmigen Querschnitt mit einem Durchmesser im Bereich von 5mm bis 10mm bestehen und/oder eine durch die Kanäle der Trägerschicht (1) gebildete offene Fläche einen Anteil von 20% bis 40 % einer Gesamtfläche der Trägerschicht (1) ausmacht.

## Claims

1. Method of producing a microperforated outer composite layer (2) for a sound-absorbing element (100), said method comprising:
a) providing a decorative layer (20) and a support layer (21) each having a front side (20a, 21a) and a reverse side (20b, 21b);
b) bonding the reverse side of the decorative layer (20) and the front side of the support layer (21) to form a layer composite that forms the outer composite layer (2);
c) reducing a thickness of the decorative layer (20) from a starting thickness d₀ to a final thickness d₁ by two-dimensionally removing some of the decorative layer (20) from its front side (20a);
d) providing the outer composite layer (2) with a microperforation composed of channels (22) of defined cross-sectional geometry that are continuous between the front side (20a) of the decorative layer (20) and the reverse side (21b) of the support layer (21);
wherein the reduction in the thickness of the decorative layer (20) follows the step of bonding the decorative layer (20) and the support layer (21) and wherein the final thickness of the decorative layer d₁ is not more than 0.6 mm, and wherein the decorative layer comprises a wood veneer and the support layer a noncombustible element;
**characterized in that** the reduction in the thickness of the decorative layer (20) achieves a substantial reduction in the area-based calorific value of the outer composite layer, wherein the final thickness of the decorative layer d₁ is at least 10% lower than the starting thickness of the decorative layer d₀ and preferably at least 20% lower than the starting thickness of the decorative layer d₀.

2. Method according to Claim 1, wherein the decorative layer (20) is a wood veneer.

3. Method according to either of Claims 1 and 2, wherein the support layer (21) comprises aluminium foil, preferably consists of aluminium foil.

4. Method according to any of Claims 1 to 3, wherein the support layer comprises at least one layer of a resin material, especially of epoxy resin, phenolic resin or melamine resin, and/or a layer of a glass fibre lamination.

5. Method according to Claim 4, said method comprising: during the providing of the outer composite layer (2) with the microperforation, lubricating a tool by means of which the microperforation is introduced by means of the support layer, especially a resin material in the support layer.

6. Method according to any of Claims 1 to 5, the method further comprising: fixing an area-based calorific value threshold and adjusting the final thickness d₁ such that an area-based calorific value of the outer composite layer (2) does not exceed the calorific value threshold.

7. Method according to any of Claims 1 to 6, wherein the channels (22) of the microperforation consist of holes having a circular cross section having a diameter in the range from 0.2 mm to 1 mm and/or a clear area formed by the channels (22) of the microperforation makes up a proportion of 1% to 10% of a total area of the outer composite layer (2).

8. Method according to any of Claims 1 to 7, wherein the providing of the outer composite layer with the microperforation follows reduction in the thickness of the decorative layer (20).

9. Method according to any of Claims 1 to 8, wherein the thickness of the decorative layer (20) is reduced by grinding.

10. Method of producing a sound-absorbing element (100), said method comprising:
a) producing an outer composite layer (2) as claimed in any of Claims 1 to 9;
b) providing a carrier layer (1, 1') having a front side (1a) and a reverse side (1b), wherein the carrier layer (1) has multiple channels (10, 10', 10") that are continuous between its front side (1a) and its reverse side (1b), such as, in particular, holes, honeycombs or slots, or the carrier layer (1, 1') consists of porous, air-permeable material;
c) bonding the reverse side (21b) of the support layer (21) to the front side (1a) of the carrier layer (1, 1') to form a layer composite that forms the sound-absorbing element (100);
wherein the outer composite layer (2) and the carrier layer (1, 1') are bonded in such a way that, within the sound-absorbing element (100), there are bonds for achieving a sound-absorbing effect that communicate between channels (22) of the microperforation of the outer composite layer (2) and the reverse side (1b) of the carrier layer (1, 1').

11. Method according to Claim 10, wherein the carrier layer (1') comprises a honeycomb structure composed of a noncombustible material, especially aluminium, and is preferably a honeycomb structure composed of a noncombustible material, and the honeycombs (10') have a regular dappled cross section, especially with a honeycomb width in the range from 6 mm to 9 mm.

12. Method according to either of Claims 10 and 11, wherein the carrier layer (1) comprises a gypsum fibreboard or a gypsum plasterboard, preferably is a gypsum fibreboard or a gypsum plasterboard, and the channels of the carrier layer (1) consist of holes having a circular cross section having a diameter in the range from 5 mm to 10 mm and/or a clear area formed by the channels of the carrier layer (1) makes up a proportion of 20% to 40% of a total area of the carrier layer (1).

## Revendications

1. Procédé de fabrication d'une couche de recouvrement composite (2) microperforée pour un élément d'absorption acoustique (100), le procédé comprenant :
a) fournir une couche décorative (20) et une couche de protection (21) comprenant respectivement un côté avant (20a, 21a) et un côté arrière (20b, 21b) ;
b) assembler le côté arrière de la couche décorative (20) et le côté avant de la couche de protection (21) en un assemblage de couches qui forme la couche de recouvrement composite (2) ;
c) réduire une épaisseur de la couche décorative (20) d'une épaisseur initiale d₀ à une épaisseur finale f₁ par enlèvement superficiel d'une partie de la couche décorative (20) depuis son côté avant (20a) ;
d) pourvoir la couche de recouvrement composite (2) d'une microperforation constituée de canaux (22) ayant une géométrie de section transversale définie qui forment un passage entre le côté avant (20a) de la couche décorative (20) et le côté arrière (21b) de la couche de protection (21) ;
la réduction de l'épaisseur de la couche décorative (20) étant effectuée après l'étape consistant à assembler la couche décorative (20) et la couche de protection (21) et l'épaisseur finale de la couche décorative d₁ étant au maximum égale à 0,6 mm, et la couche décorative comportant une feuille de placage en bois et la couche de protection un élément incombustible ;
**caractérisé en ce que** la réduction de l'épaisseur de la couche décorative (20) entraîne une réduction substantielle d'une puissance calorifique rapportée à la surface de la couche de recouvrement composite, l'épaisseur finale de la couche décorative d₁ étant au moins 10 % inférieure à l'épaisseur initiale de la couche décorative d₀ et de préférence au moins 20 % inférieure à l'épaisseur initiale de la couche décorative d₀.

2. Procédé selon la revendication 1, la couche décorative (20) étant une feuille de placage en bois.

3. Procédé selon l'une des revendications 1 à 2, la couche de protection (21) comportant un film d'aluminium, se composant de préférence d'un film d'aluminium.

4. Procédé selon l'une des revendications 1 à 3, la couche de protection comportant au moins une couche en un matériau de résine, notamment en résine époxy, en résine phénolique ou en résine de mélamine, et/ou une couche de placage en fibres de verre.

5. Procédé selon la revendication 4, le procédé comprenant : pendant l'étape consistant à pourvoir la couche de recouvrement composite (2) de la microperforation, une lubrification d'un outil au moyen duquel la microperforation est incorporée, par la couche de protection, notamment un matériau de résine de la couche de protection.

6. Procédé selon l'une des revendications 1 à 5, le procédé comprenant en outre : définition d'une valeur de seuil de puissance calorifique rapportée à la surface et dimensionnement de l'épaisseur finale d₁ de telle sorte qu'une puissance calorifique rapportée à la surface de la couche de recouvrement composite (2) ne dépasse pas la valeur de seuil de puissance calorifique.

7. Procédé selon l'une des revendications 1 à 6, les canaux (22) de la microperforation se composant de trous ayant une section transversale circulaire avec un diamètre dans la plage de 0,2 mm à 1 mm et/ou une surface ouverte formée par les canaux (22) de la microperforation représentant une part de 1 % à 10 % d'une surface totale de la couche de recouvrement composite (2).

8. Procédé selon l'une des revendications 1 à 7, l'étape consistant à pourvoir la couche de recouvrement composite de la microperforation étant exécutée après la réduction de l'épaisseur de la couche décorative (20).

9. Procédé selon l'une des revendications 1 à 8, la réduction de l'épaisseur de la couche décorative (20) étant effectuée par ponçage.

10. Procédé de fabrication d'un élément d'absorption acoustique (100), le procédé comprenant :
a) fabriquer une couche de recouvrement composite (2) selon l'une des revendications 1 à 9 ;
b) fournir une couche porteuse (1, 1') ayant un côté avant (la) et un côté arrière (1b), la couche porteuse (1) possédant plusieurs canaux (10, 10', 10"), notamment des perçages, des alvéoles ou des fentes, formant un passage entre son côté avant (la) et son côté arrière (1b), ou la couche porteuse (1, 1') se composant d'un matériau poreux perméable à l'air ;
c) assembler le côté arrière (21b) de la couche de protection (21) avec le côté avant (la) de la couche porteuse (1, 1') en un assemblage de couches qui forme l'élément d'absorption acoustique (100) ;
l'assemblage de la couche de recouvrement composite (2) et de la couche porteuse (1, 1') étant effectué de telle sorte que des liaisons communicantes sont créées dans l'élément d'absorption acoustique (100), entre les canaux (22) de la microperforation de la couche de recouvrement composite (2) et le côté arrière (1b) de la couche porteuse (1, 1'), en vue d'obtenir un effet d'absorption acoustique.

11. Procédé selon la revendication 10, la couche porteuse (1') comportant une structure alvéolaire en un matériau non combustible, notamment de l'aluminium, de préférence étant une structure alvéolaire en un matériau non combustible, et les alvéoles (10') possédant une section transversale non homogène régulière, notamment avec une largeur d'alvéoles dans la plage de 6 mm à 9 mm.

12. Procédé selon l'une des revendications 10 ou 11, la couche porteuse (1) comportant une plaque en plâtre armée de fibres ou une plaque de placoplâtre, étant de préférence une plaque en plâtre armée de fibres ou une plaque de placoplâtre, et les canaux de la couche porteuse (1) se composant de trous ayant une section transversale circulaire avec un diamètre dans la plage de 5 mm à 10 mm et/ou une surface ouverte formée par les canaux de la couche porteuse (1) représentant une part de 20 % à 40 % d'une surface totale de la couche porteuse (1) .
